Europäisches Patentamt

(19) European Patent Office

Office européen des brevets

(11) Publication number: **0 034 023**
**B1**

## (12) EUROPEAN PATENT SPECIFICATION

(45) Date of publication of patent specification: **11.05.83**

(51) Int. Cl.³: **B 65 G 5/00, B 65 D 88/76**

(21) Application number: **81300403.3**

(22) Date of filing: **30.01.81**

(54) Pool for the storage of fluids.

(30) Priority: **06.02.80 IL 59329**

(43) Date of publication of application:
**19.08.81 Bulletin 81/33**

(45) Publication of the grant of the patent:
**11.05.83 Bulletin 83/19**

(84) Designated Contracting States:
**AT BE CH DE FR GB IT LI NL SE**

(56) References cited:
**EP - A - 0 002 372**
**US - A - 3 736 754**
**US - A - 4 068 480**

(73) Proprietor: **Furman, Vladimir**
**P.O. Box 339**
**Safed (IL)**

(72) Inventor: **Furman, Vladimir**
**P.O. Box 339**
**Safed (IL)**

(74) Representative: **Coleman, Stanley et al,**
**MATHYS & SQUIRE 10 Fleet Street**
**London EC4Y 1 AY (GB)**

Courier Press, Leamington Spa, England.

# Pool for the storage of fluids

The present invention relates to a pool for the storage of fluids under pressure including liquids such as crude mineral oil, various distilled mineral oil fractions including liquefied gases, liquefied natural gas, and gases such as natural gas, various industrial gases, and many others.

Conventionally fluid such as mineral oils and heating gas are stored above the ground in tanks and gas holders, mostly cylindrical, made as a rule of steel or reinforced concrete, and usually grouped together in so-called tank farms. This conventional method of storage has various drawbacks. Thus for one a very solid construction is required in order to withstand the pressure of the stored fluid. Furthermore, in case of volatile liquids such as fuel it is necessary to provide the tank with means for vapour condensation in order to avoid a build-up of excessive pressure by evaporation, which further adds to the cost. Moreover, even with vapour condensation in the case of volatile liquids the escape of some vapour to the atmosphere is practically unavoidable and the resulting losses are both an economic burden and an ecological nuisance.

Furthermore, where the stored fluid is inflammable fire risk is great whenever a tank is damaged and where, as is conventional, the tanks are grouped in so-called tank farms fire in one of the tanks is liable to spread to neighbouring tanks. Moreover, due to their exposure, above-ground tank farms have the further serious disadvantage that in time of war they are highly vulnerable.

It may thus be summed up that the conventional above-ground storage of liquids and gases is costly and hazardous from ecological, safety and security considerations.

A pool for the storage of fluids under pressure is known from EP.A—0 002 372 which forms the prior art portion of claim 1 and which discloses the storage of liquids such as crude oil or fuel in a subterranean pool covered with a diaphragm-like cover plate sealingly applied thereto. In accordance with that method there is superimposed on the cover plate a protective body consisting of sand, soil, stones, rubbish, rocks or mixtures thereof. Inside the pool a pressure is established hydraulically or pneumatically equal to that exerted by the protective body on the cover plate and in this way the protective body is sustained via the cover plate.

In accordance with that method the diaphragm-like cover plate fulfills two functions. For one it prevents the leakage of vapour and gases from the top of the pool. In addition it transmits the pressure prevailing within the pool to the protective body thereby counteracting the weight of and supporting the latter. The cover plate which is made of a metal or metal alloy such as steel is basically rigid although a certain degree of resilience is stipulated.

In general the pool according to EP—A—0 002 372 is considered safe and reliable. However if due to some failure there occurs a pressure drop within the pool that exceeds the tolerance of the cover plate, the protective body will collapse into the pool and the pool may be damaged beyond repair. It is therefore the object of the present invention to provide an improved subterranean pool free of such danger.

In accordance with the invention there is provided a pool for the storage of fluids under pressure comprising a pit impermeable to the stored fluid and having means for the introduction and withdrawal of the stored fluid, cover means sealing the pit from above and an incoherent protective layer on said cover means, characterized in that said cover means is a membrane that is elastic under the storage pressure anchored circumferentially near the edge portion of the pit and adapted to vary between a deflated, fully sagging state in which it bears on the surface of the pit and an inflated state in which it bulges above the pit, and in that said protective layer is adapted to follow said variations of the membrane.

The fluids stored in accordance with the invention may be liquids such as crude mineral oil, various distilled mineral oil fractions liquefied natural gas and the like; or gases such as non-liquefied natural gas, various industrial gases such as oxygen, nitrogen, hydrogen, helium, ammonia and many others.

The storage pressure in the pool depends on the height of the protective layer. By way of example, a storage pressure of 3 atm. gauge and a correspondingly dimensioned protective layer have been found suitable for many purposes.

The protective layer may consist of sand, soil, stones, rubbish, rocks or mixtures thereof. During operation the protective layer above the covering membrane moves up and down with the membrane in dependence on the extent to which the pool is charged. When the pool is empty the covering membrane is in the deflated, fully sagging state in which it bears on the surface of the pit. In this state the membrane forms a cavity that assumes essentially the shape of the pit and this cavity is filled by the sagging-in protective layer. When fluid to be stored is introduced under pressure into the pool the membrane is gradually inflated and lifts the protective layer resting on it. As more fluid is introduced into the pool the membrane continues to inflate and with it the overlaying protective layer until eventually the membrane has reached its fully bulging state at which time the pool is full to capacity and no more fluid is to be introduced.

The content of fluid inside the pool and the saturation point at which the pool is full to capacity can be determined by conventional means known per se. For example, an instrument may be provided that measures the position of the membrane or of the protective layer. Such an instrument may be suitably callibrated so as to indicate the contents of the pool for each position of the membrane or protective layer. It may further be coupled to input flow control means such that the inflow of fluid into the pool is shut off automatically when the pool is full to capacity.

Upon withdrawal of fluid from the pool, the membrane and protective layer begin to sag in. As more fluid is withdrawn sagging in continues until eventually the membrane and the protective layer reach their fully sagging position in which the membrane bears on the surface of the pool.

Spreading of the incoherent solid material, that forms the protective layer should be avoided in the fully inflated and deflated states of the membrane. To this end confinement means may be provided, for example in the form of a circumferential, vertical wall. It is also possible to so design the membrane that in either of the inflated and deflated states the angle between the edge portion of the membrane and an imaginary horizontal plane does not exceed the natural slope of the protective layer. In this way any undue spreading of the protective layer is avoided.

Because of the elasticity of the covering membrane it is ensured that the latter is always in an uncreased, stretched state. In the fully deflated and inflated states the membrane is at its maximum extension and in the intermediary, horizontal state it is at maximum constriction. The membrane can, for example, be made of rubber or reinforced rubber.

The pit surface may be rendered impermeable to the fluid that is to be stored by any suitable way. For example, it may be lined with the same material, e.g. rubber, of which the membrane is made, or be made of concrete, suitably impregnated if desired.

The pit can be of any suitable shape. As a rule such shapes are preferred in which the side walls are free of corners and sharp bends. Examples of such shapes are various rotational symmetrical cavities, e.g. a spherical segment.

A pool according to the invention may be of any desired size depending on the desired storage capacity. Diameters of 20 to 1000 m are considered practical.

From the foregoing description, it is easily understood that the storage pool according to the invention is not damaged in case of unintentional pressure drop, e.g. due to leakage. In such an event the membrane and overlying protective layer merely sag in as would be the case upon normal withdrawal of the stored fluid, without any damage to the pool. Consequently, once the fault which was the cause of the leakage is repaired, normal operation can be resumed.

The storage pool according to the invention has the further advantage that the stored, pressurized fluid is at all times in direct contact with the membrane. Consequently, the required pressure inside the tank is provided by the stored fluid itself and no additional pneumatic or hydraulic pressurizing means are required.

The invention is illustrated, by way of example only, in the accompanying drawings in which:

Fig. 1 is a section through an empty storage pool according to the invention in which the membrane and protective layer are in the fully sagging state;

Fig. 2 shows the same pool in an intermediary state in which it is half full; and

Fig. 3 shows the same pool full to capacity with the membrane fully inflated.

The storage pool here illustrated comprises a pit 1 in the shape of a spherical segment, fitted with inlet 2 and outlet 3 for the stored fluid. Near the edge portion of pit 1 there is provided a retainer belt 4, e.g. of concrete, in which are anchored a lining 5 of the pit 1 and a membrane 6. Both the lining and the membrane may be of rubber, and the membrane 6 is thicker than the lining 5.

Overlying membrane 6 is a protective layer of incoherent solid material generally indicated at 7 and consisting of a lower stratum 8 and an upper stratum 9. The stratum 8 consists of particulate material e.g. sand or fine gravel and the upper stratum 9 consists of large size stones and rocks. The angle of the natural slope of the entire protective layer 7 is determined by the upper stratum 9.

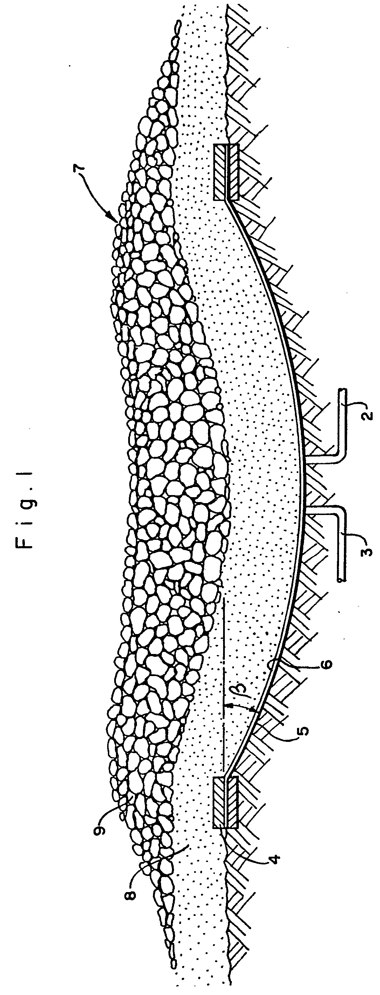

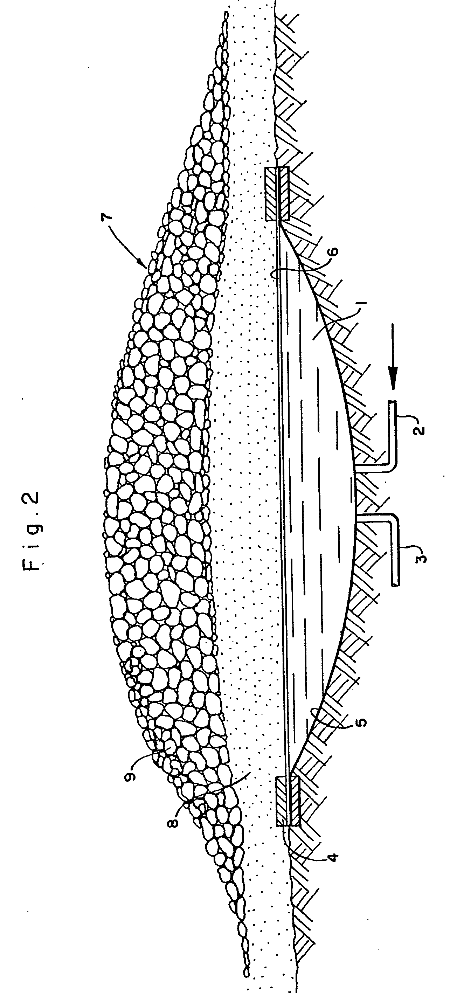

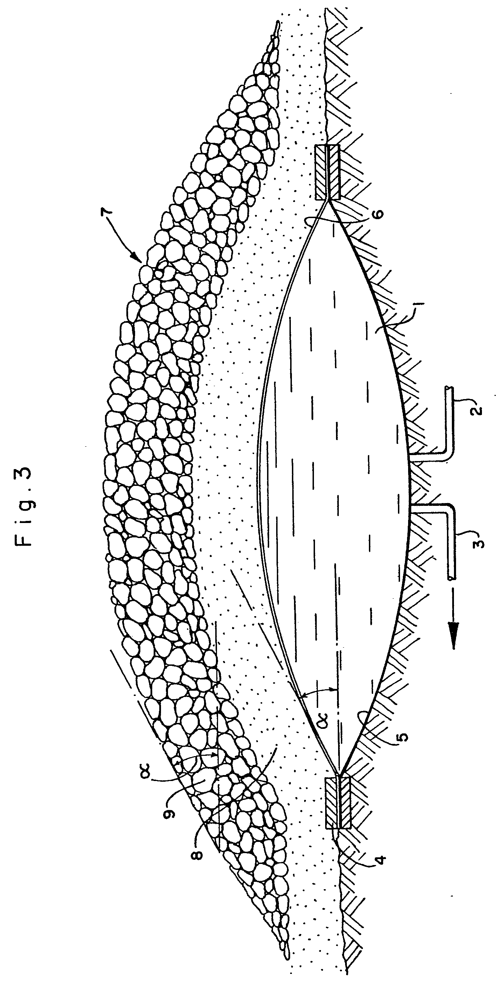

In the empty state of the pool shown in Fig. 1 membrane 6 is deflated and bears on the surface of pit 1, forming a cavity into which the overlying portion of the protective layer sags in. In the half full state of Fig. 2 membrane 6 is inflated halfway into a straight horizontal position and the overlying portion of the protective layer has been lifted accordingly. Finally, in the position of Fig. 3, the storage pool is full to capacity, membrane 6 is fully inflated and bulging, and with it the overlying portion of the protective layer 7.

As is seen from Fig. 3, the design of membrane 6 is such that in the fully inflated state the angle $\alpha$ formed between its edge portion and an imaginary horizontal plane does not exceed the natural slope $\alpha$ of the protective layer 7. Likewise, it is seen from Figs. 1 and 3 that the angle $\beta$ between the edge portion of membrane 6 and an imaginary horizontal plane in the fully deflated state of the membrane does also not exceed the natural slope $\alpha$ of the protective layer 7. The said angles formed by the membrane in the inflated and deflated states may be equal to each other or different but neither should exceed the natural slope.

Obviously the membrane 6 can assume any intermediary position between the fully sagging one of Fig. 1 and the fully bulging one of Fig. 3, depending on the extent to which the pool is filled.

Starting from the empty state of Fig. 1 the pool is filled with fluid for storage by introducing the fluid under pressure through inlet 2. The fluid inlet may be controlled by position-sensitive control means in such a way that the fluid inflow is interrupted when membrane 6 reaches its fully inflated, bulging state. For the withdrawal of the stored fluid the control means governing outlet 3 are opened and fluid can be withdrawn intermittently or continuously until the pool is completely empty and the fully sagging position of Fig. 1 has been reached again. From this position a new operational cycle can be started.

From the foregoing it is easily understood that if in the fully charged state of Fig. 3 or any intermediary state there occurs a pressure drop, e.g. due to leakage, all that happens is that as the pressure inside the pool drops the membrane 5 and the overlying portion of the protective layer begin to sag in and they continue to do so until eventually the position of Fig. 1 is reached just as would be the case in the course of regular fluid withdrawal. The utmost ensuing damage is the loss of some or all of the stored fluid with no physical damage to the pool. But even that loss is avoidable by the provision of means for capturing the expelled fluid. Consequently, once the defect that caused the leakage is repaired the pool is again operational.

It is also easily understood that during all operational phases the membrane 6 is in direct contact with the pressurized stored fluid and consequently no auxiliary hydraulic or pneumatic pressurizing means are required. For this reason the storage pool according to the invention is highly versatile and can be used equally well for the storage of liquids and gases.

## Claims

1. A pool for the storage of fluids under pressure comprising a pit (1) impermeable to the stored fluid and having means (2, 3) for the introduction and withdrawal of the stored fluid, cover means sealing the pit from above and an incoherent protective layer (7) on said cover means, characterized in that said cover means is a membrane (6) that is elastic under the storage pressure anchored circumferentially near the edge portion of the pit (1) and adapted to vary between a deflated, fully sagging state in which it bears on the surface (5) of the pit and an inflated state in which it bulges above the pit (1) and in that said protective layer (7) is adapted to follow said variations of the membrane.

2. A pool according to claim 1, characterised in that the membrane is so designed that the angle ($\alpha$, $\beta$) it forms with an imaginary horizontal plane in either of the fully inflated and deflated states does not exceed the natural slope of said protective layer (7).

## Patentansprüche

1. Specherraum zum Spiechern von Fluiden, mit einer gegenüber dem gespeicherten Fluid undurchlässigen Mulde (1), die eine Einrichtung (2, 3) für eine Zu- und Ableitung des Fluids aufweist und nach oben mittels einer Abdeckung abgedichtet ist, die mit einer losen Schutzschicht (7) versehen ist, dadurch gekennzeichnet, daß die Abdeckung eine unter dem Speicherdruck elastische Membrane (6) ist, die in Umfangsrichtung nahe dem Randbereich der Mulde (1) verankert ist und die sich zwischen einem entleerten, völlig durchhängenden und dabei den Boden (5) der Mulde berührenden Zustand und einem aufgeblasenen, dabei über die Mulde (1) nach oben ausgewölbten Zustand verändern kann, und daß die Schutzschicht (7) so eingerichtet ist, daß sie diesen Veränderungen der Membrane folgen kann.

2. Speicherraum nach Anspruch 1, dadurch gekennzeichnet, daß die Membrane so ausgebildet und angeordnet ist, daß der bezüglich einer imaginären Horizontalebene gebildete Winkel ($\alpha$, $\beta$) sowohl der voll aufgeblasenen als auch der voll entleerten Membrane (6) nicht größer ist als der natürliche Böschungswinkel der Schutzschicht (7).

## Revendications

1. Réservoir pour le stockage de fluides sous pression comprenant un puits (1), imperméable au fluide stocké et comportant des moyens (2, 3) pour l'introduction et l'évacuation du fluide stocké, un moyen de couverture obturant à sa partie supérieure le puits (1), ainsi qu'une couche non-cohérente protectrice (7) placée su ledit moyen de couverture, caractérisé en ce que ledit moyen de couverture est une membrane (6) élastique sous la pression de stockage, qui est ancrée circonférentiellement à proximité du bord du puits (1) et est propre à varier entre un état dégonflé, complètement infléchi, dans lequel elle est en contact avec la surface (5) du puits (1), et un état gonflé dans lequel elle est bornbée vers l'extérieur au-dessus du puits (1) et en ce que ladite couche protectrice (7) est capable de suivre lesdites variations de la membrane (6).

2. Réservoir selon la Revendication 1, caractérisé en ce que la membrane (6) est conçue de telle façon que l'angle ($\alpha$, $\beta$) qu'elle forme avec un plan horizontal imaginaire, soit à l'état complètement gonflé, soit à l'état complètement dégonflé, n'excède pas la pente naturelle de ladite couche protectrice (7).

Fig.1

Fig.2

Fig.3